Europäisches Patentamt

European Patent Office

Office européen des brevets

(19)

(11) EP 0 932 297 A1

(12) ## DEMANDE DE BREVET EUROPEEN

(43) Date de publication:
28.07.1999 Bulletin 1999/30

(51) Int Cl.$^6$: H04N 1/192

(21) Numéro de dépôt: 99400133.7

(22) Date de dépôt: 21.01.1999

(84) Etats contractants désignés:
AT BE CH CY DE DK ES FI FR GB GR IE IT LI LU MC NL PT SE
Etats d'extension désignés:
AL LT LV MK RO SI

(30) Priorité: 23.01.1998 FR 9800707

(71) Demandeur: SAGEM SA
75116 Paris (FR)

(72) Inventeur: Frederic, Alain
95610 Eragny sur Oise (FR)

(74) Mandataire: Bloch, Gérard
2, square de l'Avenue du Bois
75116 Paris (FR)

(54) **Procédé d'analyse d'image et dispositif d'analyse d'image pour la mise en oeuvre du procédé**

(57)   Procédé d'analyse d'une image à l'aide d'un capteur optique (1) comprenant une pluralité de cellules photosensibles alignées suivant au moins une direction d'alignement, avec un pas de décalage déterminé (p) entre elles, procédé au cours duquel les cellules effectuent, au moins deux intégrations successives pour mesurer des quantités d'énergie lumineuse émises par des surfaces élémentaires d'image, entre lesquelles on entraîne le capteur (1) et l'image (100), l'un par rapport à l'autre, parallèlement à la direction d'alignement des cellules, le long d'une fraction de pas de décalage (p), et on déduit des mesures prises par les cellules, les quantités d'énergie lumineuse émises par des fractions de surfaces élémentaires d'image, par résolution d'un système d'équations.

L'invention s'applique bien aux télécopieurs.

FIG.2

**Description**

L'invention concerne les analyseurs d'image tels qu'on en trouve dans des télécopieurs, des imprimantes, des appareils d'analyse d'image ou autres appareils de bureau.

Plus particulièrement, l'invention concerne les analyseurs d'image comprenant un capteur optique composé d'une pluralité de minuscules capteurs, ou "cellules", sensibles à la lumière et destinés chacun à mesurer la quantité de lumière émise par une surface élémentaire d'image pendant une durée d'exposition déterminée, encore appelée durée d'intégration. Les cellules sont alignées en barrette unidirectionnelle, ou en matrice bidirectionnelle, avec un pas de décalage déterminé entre elles. Comme exemple de ce type de capteur, on peut citer les capteurs CCD (Charge coupled device) et les capteurs CIS (Contact image sensor).

L'analyse d'une image par une barrette CCD, pour reprendre cet exemple, s'effectue ligne par ligne et, pour chaque ligne, le capteur découpe des surfaces élémentaires. Les cellules photosensibles produisent une charge électrique proportionnelle à la quantité d'énergie lumineuse reçue, émise par une surface élémentaire, et le signal électrique recueilli est converti en données numériques. L'image ainsi analysée et numérisée est par conséquent constituée d'une pluralité de points d'image, des pixels, et, dans l'hypothèse où la résolution de l'image originale est infinie, la résolution de l'image analysée est quant à elle limitée et sa qualité est dégradée. Classiquement, en télécopie, la résolution optique d'analyse est de l'ordre de 200 points/pouce.

Afin d'augmenter la résolution optique d'un capteur du type défini ci-dessus, on peut augmenter le nombre de cellules photosensibles en diminuant le pas de décalage entre les cellules. Cependant, le coût d'un capteur optique s'accroît plus son nombre de cellules est élevé.

La demanderesse a donc cherché à gagner en résolution optique de façon plus économique.

A cet effet, l'invention concerne un procédé d'analyse d'une image à l'aide d'un capteur optique comprenant une pluralité de cellules photosensibles alignées suivant au moins une direction d'alignement, avec un pas de décalage déterminé entre elles, procédé au cours duquel les cellules effectuent une intégration pour mesurer des quantités d'énergie lumineuse émises par des surfaces élémentaires d'image, caractérisé par le fait que les cellules effectuent au moins deux intégrations successives entre lesquelles on entraîne le capteur et l'image, l'un par rapport à l'autre, en translation parallèlement à la direction d'alignement des cellules, le long d'une fraction de pas de décalage, et on déduit des mesures prises par les cellules, les quantités d'énergie lumineuse émises par des fractions de surfaces élémentaires d'image, par résolution d'un système d'équations.

Grâce à l'invention, on peut multiplier à volonté la résolution de l'image analysée sans changer de capteur optique.

Avantageusement, on entraîne le capteur et l'image, l'un par rapport à l'autre, dans un mouvement de va-et-vient parallèlement à la direction d'alignement des cellules, le long de ladite fraction de pas de décalage.

L'invention concerne également un dispositif d'analyse d'image pour la mise en oeuvre du procédé ci-dessus, comprenant un capteur optique comportant une pluralité de cellules photosensibles alignées, suivant au moins une direction d'alignement, avec un pas de décalage déterminé entre elles, et des moyens de commande agencés pour commander une intégration des cellules de façon à ce que celles-ci mesurent des quantités d'énergie lumineuse émises par des surfaces élémentaires d'image, caractérisé par le fait que, les moyens de commande étant agencés pour commander au moins deux intégrations successives des cellules, le dispositif comprend des moyens d'entraînement agencés pour entraîner le capteur et l'image, l'un par rapport à l'autre, parallèlement à une direction d'alignement des cellules, le long d'une fraction de pas de décalage, entre les deux intégrations successives des cellules, et des moyens de traitement agencés pour déduire des mesures prises par les cellules les quantités d'énergie lumineuse émises par des fractions de surfaces élémentaires, par résolution d'un système d'équations.

L'invention sera mieux comprise à l'aide de la description suivante d'une forme de réalisation particulière du dispositif d'analyse d'image de l'invention et d'un mode de réalisation particulier du procédé d'analyse d'image de l'invention en référence au dessin annexé sur lequel:

- la figure 1 représente un schéma bloc fonctionnel du dispositif d'analyse d'image;

- la figure 2 représente une ligne d'image analysée par un capteur du dispositif de la figure 1 et

- la figure 3 représente un signal d'horloge d'intégration, un signal représentant les intégrations successives du capteur, une courbe représentant les déplacements du capteur et un signal de contrôle de position, du dispositif de la figure 1.

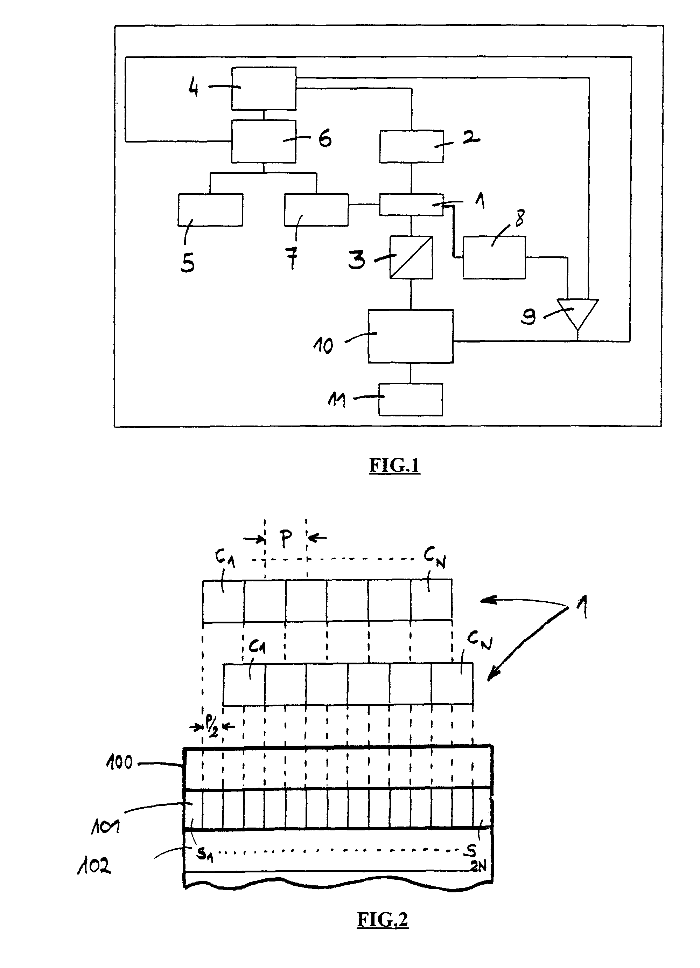

Le dispositif représenté sur la figure 1 appartient à un télécopieur et comprend un magasin d'entrée en feuilles supports d'image à analyser, un magasin de sortie des feuilles, non représentés, et un capteur optique 1.

Le capteur optique 1 est ici une barrette CIS (Contact image sensor), comportant N cellules photosensibles alignées le long d'une unique direction d'alignement, avec un pas de décalage p déterminé entre elles. Les cellules constituent des photomètres de mesure de quantités d'énergie lumineuse émises par des surfaces élémentaires d'image. La barrette CIS 1 est ainsi prévue pour analyser une image ligne par ligne. Dans l'exemple particulier de la description, le nombre N de cellules est égal à 1728 et le pas p de décalage est égal à 125 μm.

Un bloc de commande 2, reliant la barrette CIS 1 à un générateur 4 de tops d'intégration 20, est destiné à commander, à chaque top d'intégration, une intégration des cellules de façon à ce qu'elles mesurent les quantités d'énergie lumineuse émises par des surfaces élémentaires composant une ligne d'image. Les tops d'intégration 20 sont générés avec une fréquence d'intégration déterminée F et forment un signal d'horloge d'intégration.

Un convertisseur analogique/numérique 3, relié en entrée à la barrette CIS 1 et en sortie à un bloc de traitement numérique 10, est destiné à convertir en données numériques les mesures prises par les cellules et à fournir les mesures, sous forme de données, au bloc de traitement 10. En outre, une mémoire d'image 11 est connectée au bloc de traitement 10. Celui-ci est prévu pour déduire des mesures prises par les cellules les quantités d'énergie lumineuse émises par des moitiés de surfaces élémentaires, par résolution d'un système d'équations, comme cela sera explicité dans la description du fonctionnement du dispositif d'analyse d'image.

Un moteur d'entraînement pas à pas 5 est destiné à entraîner une feuille supportant une image à analyser, par l'intermédiaire d'un système d'entraînement à galets non représenté. Afin d'être analysée, l'image peut ainsi être entraînée par le moteur 5 du magasin d'entrée au magasin de sortie, en passant devant la barrette CIS 1 dans un mouvement de translation pas à pas perpendiculairement à la direction d'alignement des cellules de la barrette 1, chaque pas étant égal à une hauteur de ligne d'image.

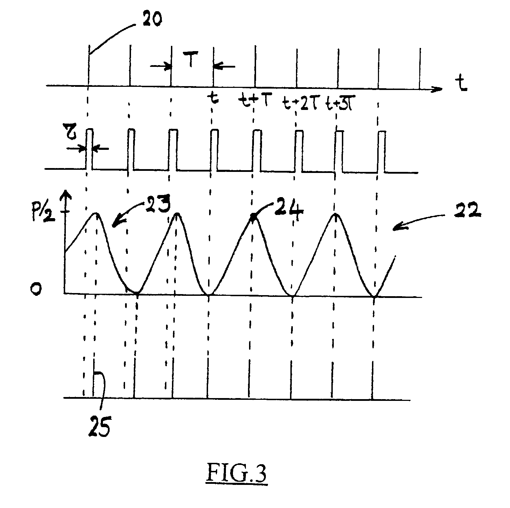

La barrette CIS 1 est montée sur un vibreur 7 destiné à la faire osciller dans un mouvement de va-et-vient continu, parallèlement à la direction d'alignement des cellules, le long d'un demi-pas de décalage, soit p/2. La courbe 22 de la figure 3, dont l'abscisse représente le temps et l'ordonnée le déplacement spatial de la barrette 1, représente le mouvement de va-et-vient, les oscillations, de la barrette CIS 1. Chacun des allers et retours de la barrette 1 constitue un déplacement élémentaire d'un demi-pas de décalage et, entre les déplacements élémentaires successifs, la barrette CIS 1 passe par une position d'équilibre, d'arrêt, 24.

Le moteur pas à pas 5 et le vibreur 7 sont reliés au générateur 4 par l'intermédiaire d'un bloc de commande et de synchronisation 6 destiné à commander les fonctionnements du vibreur 7 et du moteur 5 et à synchroniser, sous la commande des tops d'intégration 20, d'une part, les intégrations successives 21 de la barrette CIS 1 et ses déplacements élémentaires parallèlement à la direction d'alignement des cellules et, d'autre part, les déplacements élémentaires de la barrette CIS 1 parallèlement à la direction d'alignement des cellules et les déplacements pas à pas de l'image perpendiculairement à la direction d'alignement des cellules. Les intégrations 21 de la barrette CIS 1 et ses déplacements élémentaires parallèlement à la direction d'alignement des cellules sont synchrones lorsque la barrette 1 effectue un déplacement élémentaire d'un demi-pas de décalage entre deux intégrations successives de la barrette 1, autrement dit lorsque la barrette 1 passe par une position d'équilibre 24 sensiblement à chaque top d'intégration 20. Les déplacements élémentaires de la barrette 1 et les déplacements pas à pas de l'image, respectivement parallèlement et perpendiculairement à la direction d'alignement des cellules, sont synchrones lorsque l'image est entraînée d'un pas, le long d'une hauteur de ligne d'image, entre les allers successifs de la barrette CIS le long d'un demi-pas de décalage, la barrette CIS 1 analysant une ligne d'image au cours de chaque aller.

Le dispositif d'analyse d'image comprend également un générateur 8, relié à la barrette CIS 1, destiné à générer des tops de position 25 d'un signal d'horloge spatiale, entre deux déplacements élémentaires successifs de la barrette CIS 1, aux instants auxquels la barrette 1 passe par une position d'équilibre 24. Un bloc de contrôle de position 9, à deux entrées et une sortie, est relié en entrée au générateur 4 et au générateur 8 et, en sortie au bloc de commande et de synchronisation 6 et au bloc de traitement numérique 10. Le bloc 9 est destiné à vérifier le synchronisme des déplacements élémentaires de la barrette CIS 1 parallèlement à la direction d'alignement des cellules et ses intégrations successives, afin de générer un signal de validation, le cas échéant.

Enfin, le télécopieur comprend un clavier comportant une touche d'analyse destinée à commander l'analyse d'une image et une unité centrale de commande à laquelle sont reliés le clavier et les éléments du dispositif d'analyse d'image. Le clavier et l'unité centrale ne sont pas représentés sur la figure 1.

Après la description structurelle du dispositif d'analyse d'image, le procédé d'analyse d'une image 100 portée par une feuille support, correspondant au fonctionnement du dispositif d'analyse d'image, va maintenant être décrit.

On place la feuille supportant l'image 100 à analyser dans le magasin d'entrée et, en appuyant sur la touche d'analyse du télécopieur, on lance l'analyse de l'image.

Sous la commande de l'unité centrale, le générateur 4 génère des tops d'intégration 20, avec la fréquence d'intégration F. A chaque top d'intégration, le bloc 2 commande l'intégration (21) des cellules de la barrette CIS 1 pendant une durée d'intégration τ déterminée.

Sous la commande des tops d'intégration 20 et du bloc de commande et de synchronisation 6, le vibreur 7 entraîne la barrette CIS 1 de façon à ce qu'elle oscille en synchronisme avec les intégrations des cellules, dans un mouvement de va-et-vient continu le long d'un demi-pas de décalage, parallèlement à la direction d'alignement des cellules. La barrette CIS 1 étant initialement au repos, elle passe d'abord par un régime transitoire 23 avant d'osciller correctement. Pendant ce régime transitoire 23, les déplacements élémentaires, c'est-à-dire les oscillations, de la barrette 1 et ses intégrations ne sont pas synchrones. Le générateur 8 génère des tops de position 25 entre les déplacements élémentaires successifs d'un demi-pas de décalage de la barrette CIS 1. Le bloc de contrôle de position 9 surveille les déplacements de la barrette CIS 1 en déterminant les déphasages successifs $\Delta\varphi$ entre les tops de position 25 et les tops d'intégration 20. Lorsque le déphasage $\Delta\varphi$ sont sensiblement nuls, autrement dit lorsque les oscillations et les intégrations de la barrette CIS 1 sont synchrones, le bloc 9 génère un signal de validation.

Sous la commande du signal de validation, le bloc de commande et de synchronisation 6 commande le fonctionnement du moteur pas à pas 5 afin d'entraîner l'image 100 devant la barrette CIS 1 et perpendiculairement à la direction d'alignement des cellules, dans un mouvement de translation pas à pas, chaque pas étant égal à une hauteur de ligne d'image, en synchronisme avec les déplacements élémentaires de la barrette CIS 1, comme précédemment explicité. On soulignera ici que la fréquence de pas du moteur 5 est égale à la moitié de la fréquence d'intégration F. Ainsi, entre les pas successifs de l'image 100 d'une hauteur de ligne d'image, le générateur 4 génère deux tops d'intégration successifs sous la commande desquels les cellules de la barrette 1 effectuent deux intégrations successives pour l'analyse d'une ligne d'image 101.

Pour l'analyse de chaque ligne d'image 101, les cellules effectuent donc deux intégrations successives aux instants t et t+T, avec T=1/F. A chacun de ces deux instants, la barrette CIS 1 passe par une position d'équilibre 24 et, entre ces deux instants, elle est entraînée par rapport à l'image 100 le long d'un demi-pas de décalage, parallèlement à la direction d'alignement des cellules, dans un sens aller.

Puis, entre l'instant t+T et l'instant t+2T auquel les cellules effectuent une nouvelle intégration, la barrette CIS 1 est entraînée par rapport à l'image 100 dans un sens retour, opposé au sens aller, le long d'un demi-pas de décalage et, concomitamment, l'image 100 est entraînée par rapport à la barrette 1 le long d'une hauteur de ligne d'image, perpendiculairement à la direction d'alignement des cellules.

Pour l'analyse de la ligne d'image suivante 102, les cellules effectuent deux intégrations successives aux instants t+2T et t+3T entre lesquels la barrette CIS 1 est entraînée par rapport à l'image 100 en sens aller, le long d'un demi-pas de décalage, comme décrit ci-dessus pour la ligne 101.

Ainsi, la barrette CIS 1 est entraînée par rapport à l'image 100 en va-et-vient continu le long d'un demi-pas de décalage, parallèlement à la direction d'alignement des cellules et, concomitamment, l'image 100 est entraînée par rapport à la barrette CIS 1, perpendiculairement à la direction d'alignement des cellules, le long d'un pas d'une hauteur de ligne d'image, entre les allers successifs de la barrette 1 le long d'un demi-pas de décalage.

Sous la commande du signal de validation généré par le bloc 9, le bloc de traitement 10 établit un système d'équations à l'aide des mesures prises par les cellules, pour chaque ligne d'image.

Pour chaque ligne d'image 101, les N cellules de la barrette CIS 1 mesurent les quantités d'énergie lumineuse émises par N surfaces élémentaires composant la ligne d'image 101, aux instants t et t+T. Si on découpe la ligne d'image en 2*N moitiés de surfaces élémentaires $s_i$ d'indice i, avec i variant de 1 à 2*N, chaque cellule $c_k$ d'indice k, avec k variant de 1 à N, mesure, à l'instant t, la quantité d'énergie lumineuse $P_k(t)$ et, à l'instant t+T, la quantité d'énergie lumineuse $P_k(t+T)$, avec:

$$P_k\left(t\right)=\frac{1}{2}\sum_{i=N_k}^{N_k+1}E_i$$

$$P_k\left(t+T\right)=\frac{1}{2}\sum_{i=N_k+1}^{N_k+2}E_i$$

$E_i$ représente la quantité d'énergie lumineuse émise par la moitié de surface élémentaire $s_i$ d'indice i, et $N_k=1+2$ (k-1).

A l'aide de l'ensemble des valeurs $P_k(t)$ et $P_k$ (t+T) mesurées par les cellules $c_k$ d'indice k, le bloc de traitement 10 établit un système d'équations.

La barrette CIS 1 mesure directement la valeur de $E_1$, la moitié de surface élémentaire d'indice 1, $s_1$, étant une référence de blanc.

Puis le bloc de traitement 10 résout le système d'équations afin de déterminer les valeurs $E_i$, autrement dit les quantités d'énergies lumineuses émises par les moitiés de surfaces élémentaires $s_i$, avec i variant de 1 à 2*N, composant la ligne d'image 101.

Le bloc de traitement procède ainsi pour toutes les lignes composant l'image analysée 100. L'image résultant de l'analyse et du traitement est mémorisée dans la mémoire d'image 11.

La résolution de l'image mémorisée est ainsi égale à 2*R, R étant la résolution optique de la barrette CIS 1.

Afin d'augmenter encore d'avantage la résolution de l'image, on pourrait également envisager que, pour l'analyse de chaque ligne d'image, les cellules effectuent plus de deux intégrations successives entre lesquelles la barrette CIS 1 est entraînée par rapport à l'image, le long d'une fraction de pas de décalage, dans une direction parallèle à la direction d'alignement des cellules. Dans ce cas, il faut que le déplacement global de la barrette, égal à la somme des déplacements élémentaires d'une fraction de pas de décalage, soit inférieur à un pas de décalage complet.

**Revendications**

1. Procédé d'analyse d'une image à l'aide d'un capteur optique (1) comprenant une pluralité de cellules photosensibles alignées suivant au moins une direction d'alignement, avec un pas de décalage déterminé (p) entre elles, procédé au cours duquel les cellules effectuent une intégration pour mesurer des quantités d'énergie lumineuse émises par des surfaces élémentaires d'image, caractérisé par le fait que les cellules effectuent au moins deux intégrations successives entre lesquelles on entraîne le capteur (1) et l'image (100), l'un par rapport à l'autre, parallèlement à la direction d'alignement des cellules, le long d'une fraction de pas de décalage (p), et on déduit des mesures prises par les cellules, les quantités d'énergie lumineuse émises par des fractions de surfaces élémentaires d'image, par résolution d'un système d'équations.

2. Procédé selon la revendication 1, dans lequel on entraîne le capteur (1) et l'image (100), l'un par rapport à l'autre, dans un mouvement de va-et-vient parallèlement à la direction d'alignement des cellules, le long de ladite fraction de pas de décalage.

3. Procédé selon la revendication 1, dans lequel on génère des tops d'intégration (20) sous la commande desquels on synchronise l'entraînement relatif du capteur (1) et de l'image (100) parallèlement à la direction d'alignement des cellules et les intégrations successives des cellules.

4. Procédé selon l'une des revendications 1 à 3, dans lequel le capteur (1) étant unidirectionnel et destiné à analyser l'image ligne par ligne, on entraîne le capteur (1) et l'image (100), l'un par rapport à l'autre, dans un mouvement de va-et-vient parallèlement à la direction d'alignement des cellules, le long de ladite fraction de pas de décalage, et, concomitamment, entre les allers successifs, on entraîne le capteur (1) et l'image (100), l'un par rapport à l'autre, en translation perpendiculairement à la direction d'alignement des cellules, le long d'une hauteur de ligne d'image.

5. Procédé selon la revendication 4, dans lequel on synchronise l'entraînement relatif du capteur (1) et de l'image (100) parallèlement à la direction d'alignement des cellules et l'entraînement relatif du capteur (1) et de l'image (100) perpendiculairement à la direction d'alignement.

6. Procédé selon l'une des revendications 3 et 4, dans lequel on génère des tops de position (25) entre les déplacements élémentaires relatifs du capteur (1) et de l'image (100), le long de la fraction de pas de décalage parallèlement à la direction d'alignement des cellules, on détermine les déphasages ($\Delta\varphi$) entre les tops de position (25) et les tops d'intégration (20) et on génère un signal de validation lorsque le déphasage ($\Delta\varphi$) sont sensiblement nuls.

7. Dispositif d'analyse d'image pour la mise en oeuvre du procédé selon l'une des revendications 1 à 6, comprenant un capteur optique (1) comportant une pluralité de cellules photosensibles alignées, suivant au moins une direction d'alignement, avec un pas de décalage (p) déterminé entre elles, et des moyens de commande (2) agencés pour commander une intégration des cellules de façon à ce que celles-ci mesurent des quantités d'énergie lumineuse émises par des surfaces élémentaires d'image, caractérisé par le fait que, les moyens de commande (2) étant agencés pour commander au moins deux intégrations successives des cellules, le dispositif comprend des moyens d'entraînement (7) agencés pour entraîner le capteur (1) et l'image (100), l'un par rapport à l'autre, parallèlement à une direction d'alignement des cellules, le long d'une fraction de pas de décalage, entre les deux intégrations successives des cellules, et des moyens de traitement (10) agencés pour déduire des mesures prises par les cellules les quantités d'énergie lumineuse émises par des fractions de surfaces élémentaires, par résolution d'un système d'équations.

8. Dispositif selon la revendication 7, comprenant des moyens (7) d'entraînement relatif du capteur (1) et de l'image (100), en va-et-vient parallèlement à la direction d'alignement des cellules, le long de la fraction de pas de décalage.

9. Dispositif selon la revendication 8, comprenant des moyens (4) pour générer des tops d'intégration (20) et des moyens (6) pour synchroniser les intégrations successives du capteur (1) et l'entraînement relatif en va-et-vient du capteur (1) et de l'image (100).

10. Dispositif selon l'une des revendications 7 à 9, dans lequel, le capteur (1) étant unidirectionnel et destiné à analyser l'image (100) ligne par ligne, il est en outre prévu d'autres moyens d'entraînement relatif du capteur (1) et de l'image (100), agencés pour entraîner le capteur (1) et l'image (100) l'un par rapport à l'autre, perpendiculairement à la direction d'alignement des cellules, le long d'une hauteur de ligne d'image entre les allers successifs de l'entraînement relatif en va-et-vient du capteur (1) et de l'image (100) parallèlement à la direction d'alignement des cellules.

11. Dispositif selon la revendication 10, comprenant des moyens (6) pour synchroniser l'entraînement relatif du capteur (1) et de l'image (100) parallèlement à la direction d'alignement des cellules, et l'entraînement relatif du capteur (1) et de l'image (100) perpendiculairement à la direction d'alignement des cellules.

12. Dispositif selon l'une des revendications 7 à 11, comprenant des moyens (8) pour générer des tops de position (25) entre les déplacements élémentaires relatifs du capteur (1) et de l'image (100) le long d'une fraction de pas de décalage, parallèlement à la direction d'alignement des cellules, et des moyens (9) de contrôle de position agencés pour évaluer les déphasages ($\Delta\varphi$) entre les tops de position (25) et les tops d'intégration (20) et pour générer un signal de validation lorsque lesdits déphasages ($\Delta\varphi$) sont sensiblement nuls.

**FIG.1**

**FIG.2**

FIG.3

# EP 0 932 297 A1

Office européen
des brevets
**RAPPORT DE RECHERCHE EUROPEENNE**

Numéro de la demande

EP 99 40 0133

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | FR 2 385 274 A (CIT ALCATEL) 20 octobre 1978 | 1,2,7,8 | H04N1/192 |
| Y | * le document en entier * | 3-5,9-11 | |
| Y | DE 196 30 926 A (SANYO ELECTRIC CO) 6 février 1997 * colonne 3, ligne 36 - colonne 4, ligne 7 * * figure 2 * | 3-5,9-11 | |
| A | US 3 830 975 A (POTTER J) 20 août 1974 * colonne 7, ligne 36 - colonne 8, ligne 6 * | 6,12 | |

DOMAINES TECHNIQUES RECHERCHES (Int.Cl.6)

H04N

Le présent rapport a été établi pour toutes les revendications

| Lieu de la recherche | Date d'achèvement de la recherche | Examinateur |
|---|---|---|
| LA HAYE | 8 avril 1999 | Hubeau, R |

**ANNEXE AU RAPPORT DE RECHERCHE EUROPEENNE
RELATIF A LA DEMANDE DE BREVET EUROPEEN NO.**

EP 99 40 0133

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-04-1999

| Document brevet cité au rapport de recherche | | Date de publication | Membre(s) de la famille de brevet(s) | | Date de publication |
|---|---|---|---|---|---|
| FR 2385274 | A | 20-10-1978 | AUCUN | | |
| DE 19630926 | A | 06-02-1997 | JP | 9039292 A | 10-02-1997 |
| | | | US | 5808650 A | 15-09-1998 |
| US 3830975 | A | 20-08-1974 | CA | 964201 A | 11-03-1975 |
| | | | DE | 2219442 A | 16-11-1972 |
| | | | FR | 2133739 A | 01-12-1972 |
| | | | GB | 1387434 A | 19-03-1975 |
| | | | US | 3813492 A | 28-05-1974 |

EPO FORM P0460

Pour tout renseignement concernant cette annexe : voir Journal Officiel de l'Office européen des brevets, No.12/82